# EUROPEAN PATENT SPECIFICATION

(11) **EP 3 751 034 B1**
(45) Date of publication and mention of the grant of the patent: **15.09.2021**
(21) Application number: 20177034.4
(22) Date of filing: 28.05.2020
(51) Int. Cl.: D03D 47/00, D03D 47/30

(54) **WEFT-YARN DETECTION APPARATUS OF LOOM**
SCHUSSFADENERKENNUNGSVORRICHTUNG FÜR EINE WEBMASCHINE
APPAREIL DE DÉTECTION DE FIL DE TRAME D'UN MÉTIER À TISSER

(30) Priority: 13.06.2019 JP 2019109980
(43) Date of publication of application: 16.12.2020
(73) Proprietor: Kabushiki Kaisha Toyota Jidoshokki, Kariya-shi, Aichi 448-8671 (JP)
(72) Inventor: YAGI, Daisuke, Kariya-shi Aichi 448-8671 (JP)
(74) Representative: TBK

(56) References cited:
- CN-A- 1 093 425
- JP-A- S 575 947
- JP-A- S61 245 348

## Description

### BACKGROUND ART

The present disclosure relates to a weft-yarn detection apparatus of a loom.

In general, a weft-yarn detection apparatus for detecting an arrival of a weft yarn is provided for a loom that inserts the weft yarn without using a shuttle. The weft-yarn detection apparatus is used for checking whether the weft yarn has been inserted normally. Examples of such weft-yarn detection apparatuses include an optical-type weft-yarn detection apparatus provided with a light-emitting element, a light-receiving element, and a lens. In the optical-type weft-yarn detection apparatus, light emitted from the light-emitting element is projected through the lens on a path formed in a reed, and the projected light is received by the light-receiving element. When a leading end of the weft yarn traveling through the path formed in the reed passes through a detection position (a light-projected position) of the weft-yarn detection apparatus, an amount of the light received by the light-receiving element changes, and a level of an output signal output from the light-receiving element changes in response to the change in the amount of the light received by the light-receiving element. In this way, the arrival of the weft yarn is detected based on the change in the level of the output signal output from the light-receiving element.

In general, a spherical lens is used as the lens of the weft-yarn detection apparatus. The spherical lens has two lens surfaces. One of the lens surfaces is a spherical surface having a constant curvature, and the other of the lens surfaces is a flat surface not having a curvature. This type of the spherical lens is also referred to as a plano-convex spherical lens. In the weft-yarn detection apparatus including the plano-convex spherical lens, the light emitted from the light-emitting element converges through the lens identically in both the horizontal and vertical directions. The greater the curvature of the plano-convex spherical lens is, the more strongly the light converges, and accordingly, the narrower a detection range of the weft-yarn detection apparatus becomes.

On the other hand, the path in the reed is formed into a recessed shape and extends in the horizontal direction. The weft yarn travels along the path formed in the reed in the horizontal direction (a longitudinal direction of the reed). At that time, a position of the weft yarn traveling through the path in the reed varies. Some of warp yarns and cut-off selvages are present in proximity to opposite sides of the weft-yarn detection apparatus in the horizontal direction. If the weft-yarn detection apparatus is a reflection type, the light-receiving element may receive the light reflected off some of the warp yarns and the cut-off selvages, which may lead to detection failure of the weft yarn. Therefore, the detection range of the weft-yarn detection apparatus is preferably set narrow in the horizontal direction so as to exclude the warp yarns and the cut-off selvages, and wide in the vertical direction (a short-length direction of the reed) perpendicular to the horizontal direction so as to include a whole path in the reed in the vertical direction.

However, in the weft-yarn detection apparatus using the plano-convex spherical lens, if the curvature of the lens is set small such that the detection range includes the whole path in the reed in a sectional view taken along the vertical direction, the detection range may also include some of the warp yarns and the cut-off selvages, which is likely to cause the detection failure of the weft yarn. If the curvature of the lens is set great so as to reduce the occurrence of the detection failure of weft yarn, the detection range may exclude a part of the path formed in the reed, which may cause the weft-yarn detection apparatus to fail a secure detection of the weft yarn.

An optical-type weft-yarn detection apparatus including a lens disclosed in Japanese Examined Patent Application Publication No. S61-51059 is known. The weft-yarn detection apparatus according to the above Patent Publication uses a cylindrical lens.

In the weft-yarn detection apparatus according to the above Patent Publication, a convex surface of the cylindrical lens has a curvature in a direction perpendicular to a weft-inserting direction. Accordingly, when the light emitted from the light-emitting element is projected through the cylindrical lens on the path formed in the reed, the light emitted from the light-emitting element converges in the vertical direction and therefore the detection range may fail to include the whole path in the reed, whereas the light does not converge in the horizontal direction and therefore the detection range may include some of the warp yarns and the cut-off selvages, which is likely to cause detection failure of the weft yarn.

JP S57 5947 A discloses a weft-yarn apparatus according to the preamble of claim 1.

The present disclosure has been made in view of the above circumstances and is directed to providing a weft-yarn detection apparatus of a loom which is capable of reducing occurrence of detection failure of a weft yarn and securely detecting the weft yarn that travels through a path formed in a reed.

### SUMMARY

In accordance with an aspect of the present disclosure, there is provided a weft-yarn detection apparatus of a loom for detecting an arrival of a weft yarn inserted. The weft-yarn detection apparatus of the loom includes a lens disposed to face the weft yarn inserted along a weft-inserting direction, a light-emitting element emitting light to be projected on the weft yarn through the lens, and a light-receiving element receiving the light emitted from the light-emitting element. The lens is a cylindrical lens. A lens surface of the lens on a side facing the weft yarn is a convex surface and has a curvature that is greater in the weft-inserting direction than in a short-length direction of a reed.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure, together with objects and advantages thereof, may best be understood by reference to the following description of the embodiments together with the accompanying drawings in which:
FIG. 1 is a schematic horizontal section view showing essential portions of a loom that includes a weft-yarn detection apparatus according to an embodiment of the present disclosure; and
FIG. 2 is a schematic vertical section view showing essential portions of the loom that includes the weft-yarn detection apparatus according to the embodiment of the present disclosure.

### DETAILED DESCRIPTION OF THE EMBODIMENTS

The following will describe a weft-yarn detection apparatus of a loom according to an embodiment of the present disclosure in detail with reference to the accompanying drawings.

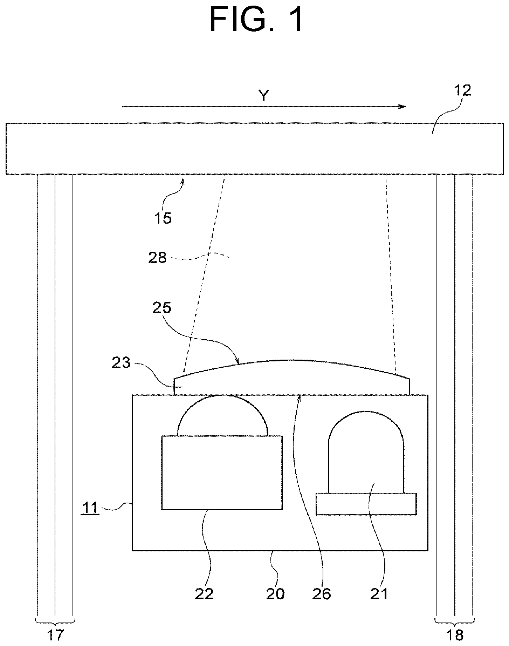

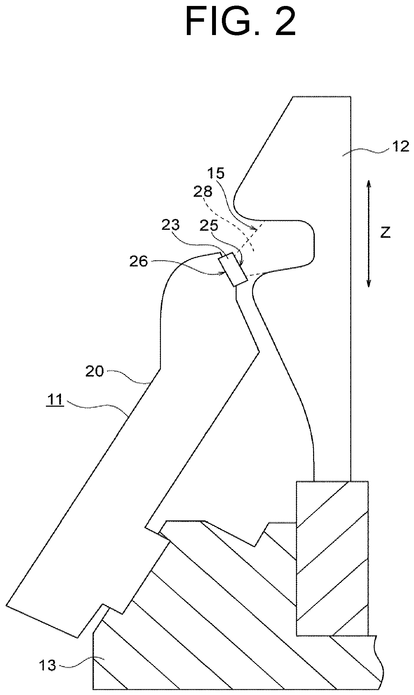

FIG. 1 is a schematic horizontal section view showing essential portions of the loom that includes the weft-yarn detection apparatus according to the embodiment of the present disclosure. FIG. 2 is a schematic vertical section view showing essential portions of the loom that includes the weft-yarn detection apparatus according to the embodiment of the present disclosure. The present disclosure is applied to a loom that inserts a weft yarn without using a shuttle, that is, a shuttleless loom. Examples of the shuttleless loom include a rapier loom, a gripper loom, an air-jet loom, and a water-jet loom. The present embodiment will be described by taking the air-jet loom as an example.

Referring to FIGS. 1 and 2, a weft-yarn detection apparatus 11 is attached to a sley 13, together with a reed 12. Each of the reed 12 and the sley 13 is a long member the longitudinal side of which extends in a weft-inserting direction Y. The weft-inserting direction Y is a direction in which the weft yarn (not shown) moves when inserted. In the air-jet loom, the weft yarn travels in the weft-inserting direction Y by a flow of air jetted from a main nozzle and sub-nozzles that are not shown.

As shown in FIG. 2, a path 15 is formed in the reed 12. The path 15 is formed into a recessed shape when viewed from the weft-inserting direction Y The weft yarn moves (travels) in the weft-inserting direction Y along the path 15 formed in the reed 12 in the air-jet loom.

The weft-yarn detection apparatus 11 is an apparatus for detecting an arrival of the weft yarn inserted, and is disposed on an end side in the weft-inserting direction Y The end side in the weft-inserting direction Y is an opposite side to a start side in the weft-inserting direction Y where the main nozzle is disposed. In a longitudinal direction of the reed 12, warp yarns 17 are disposed in proximity to one side (left side in FIG. 1) of the weft-yarn detection apparatus 11, and cut-off selvages 18 are disposed in proximity to the other side (right side in FIG. 1) of the weft-yarn detection apparatus 11.

The weft-yarn detection apparatus 11 includes a light-emitting element 21 that emits light for weft yarn detection, a light-receiving element 22 that is arranged in parallel with the light-emitting element 21 in the weft-inserting direction Y, and a lens 23 that is disposed at the front of the light-emitting element 21 and the light-receiving element 22. The light-emitting element 21 and the light-receiving element 22 are disposed inside a main body 20 of the weft-yarn detection apparatus 11. In the embodiment of the present disclosure, the light-emitting element 21 includes a light emitting diode (LED), and the light-receiving element 22 includes a photo diode (PD), as an example. A light-emitting surface of the light-emitting element 21 is disposed to face the lens 23, and a light-receiving surface of the light-receiving element 22 is also disposed to face the lens 23.

The lens 23 is attached to the main body 20 of the weft-yarn detection apparatus 11 to face the weft yarn (not shown) that is guided to be inserted along the path 15 in the reed 12 in the weft-inserting direction Y The lens 23 is provided by a cylindrical lens. Specifically, the lens 23 has a lens surface 25 located on one side of the lens 23 in a thickness direction and a lens surface 26 located on the other side of the lens 23 in the thickness direction. The lens surface 25 is a convex surface having a predetermined curvature, and the lens surface 26 is a flat surface that does not have a curvature in any direction. The lens 23 having such a configuration is also called a plano-convex cylindrical lens because the lens surface 25 on the one side is a convex surface and the lens surface 26 on the other side is a flat surface. The lens surface 25 has different curvatures depending on the direction. Specifically, the lens surface 25 has the curvature that is greater in the weft-inserting direction Y than in a short-length direction Z of the reed 12. The short-length direction Z of the reed 12 corresponds to a direction perpendicular to the weft-inserting direction Y In the embodiment of the present disclosure, the lens surface 25 is the convex surface (a part of a cylindrical surface) having the curvature only in the weft-inserting direction Y In other words, the lens 23 is provided by the cylindrical lens having the curvature only in the weft-inserting direction Y In the thickness direction of the lens 23, the lens surface 25 is disposed on a side of the lens 23 that faces the path 15 in the reed 12, i.e. a side of the lens 23 that faces the weft yarn, and the lens surface 26 is disposed on the other side of the lens 23 that faces the light-emitting element 21 and the light-receiving element 22.

In the air jet loom having the configuration described above, the light emitted from the light-emitting element 21 of the weft-yarn detection apparatus 11 converges through the lens 23 to be projected on the path 15 formed in the reed 12. When a leading end of the weft yarn passes through a light-projected position in the path 15 formed in the reed 12 in this state, the light is projected on and reflected off the weft yarn. The reflected light is received by the light-receiving element 22 through the lens 23. An amount of the light received by the light-receiving element 22 changes before and after the leading end of the weft yarn passes through the light-projected position in the path 15. That is, the amount of the light received by the light-receiving element 22 significantly changes at the moment when the leading end of the weft yarn passes through the light-projected position in the path 15. Accordingly, the weft-yarn detection apparatus 11 is capable of detecting the arrival of the weft yarn based on the change in the amount of the light received by the light-receiving element 22.

In the embodiment of the present disclosure, the lens surface 25 has the curvature that is greater in the weft-inserting direction Y than in the short-length direction Z of the reed 12, as the configuration of the lens 23. When the light emitted from the light-emitting element 21 of the weft-yarn detection apparatus 11 is projected through the lens 23 on the path 15 formed in the reed 12, rays of the light converges strongly in the weft-inserting direction Y whereas the rays of the light does not converge much in the short-length direction Z of the reed 12. Accordingly, a detection range 28 of the weft-yarn detection apparatus 11 is secured more widely in the short-length direction Z of the reed 12, and is narrowed more in the weft-inserting direction Y than the detection range in Japanese Examined Patent Application Publication No. S61-51059, as shown in FIGS. 1 and 2.

In the embodiment of the present disclosure, the lens 23 of the weft-yarn detection apparatus 11 is provided by the cylindrical lens that has a curvature only in the weft-inserting direction Y, in other words, the lens surface 25 of the lens 23 has a curvature only in the weft-inserting direction Y When the light emitted from the light-emitting element 21 of the weft-yarn detection apparatus 11 is projected through the lens 23 on the path 15 formed in the reed 12, the rays of the light does not converge in the short-length direction Z of the reed 12 perpendicular to the weft-inserting direction Y, but converges only in the weft-inserting direction Y along the longitudinal direction of the reed 12. Accordingly, the detection range 28 of the weft-yarn detection apparatus 11 is secured more widely in the short-length direction Z of the reed 12 and is narrowed more in the weft-inserting direction Y than the detection range in Japanese Examined Patent Application Publication No. S61-51059.

Therefore, the whole of the path 15 in the reed 12 is included in the detection range 28 of the weft-yarn detection apparatus 11, and the warp yarns 17 and the cut-off selvages 18 are excluded from the detection range 28. As a result, the occurrence of the detection failure of the weft yarn, which may be caused by the light reflected off some of the warp yarns 17 and the cut-off selvages 18, may be reduced. The weft yarn traveling through the path 15 formed in the reed 12 may be securely detected. In addition, in the longitudinal direction of the reed 12 (the direction parallel to the weft-inserting direction Y), spreads of the light emitted from the light-emitting element 21 are suppressed by the lens 23, by which the light emitted from the light-emitting element 21 may be efficiently received by the light-receiving element 22. This increases the amount of the light received by the light-receiving element 22, thereby increasing the strength of the output signal output from the light-receiving element 22.

### <Modification examples>

The technical scope of the present disclosure is not limited to the embodiment described above, but is intended to include various modifications to and improvements on the components of the disclosure and combinations of the components as far as they offer equivalent advantageous effects in essence to the scope of the claims.

For example, in the embodiment described above, the curvature of the lens surface 25 in the weft-inserting direction Y is symmetric as shown in FIG. 1. However, the scope of the present disclosure is not limited to the embodiment described above. The curvature of the lens surface 25 may be asymmetric.

In the embodiment described above, the light-emitting element 21 and the light-receiving element 22 are arranged in parallel in the weft-inserting direction Y. However, the scope of the present disclosure is not limited to the embodiment described above. The light-emitting element 21 and the light-receiving element 22 may be arranged in a direction perpendicular to the weft-inserting direction Y, that is, a vertical direction.

The embodiment above is described by taking a reflection-type weft-yarn detection apparatus as an example. However, the scope of the present disclosure is not limited to the embodiment described above. The present disclosure may be applied to a transmission-type weft-yarn detection apparatus.

The weft-yarn detection apparatus of the loom according to the present disclosure may also be applied as a weft-yarn detection apparatus disposed at a position within a weaving width, in addition to the weft-yarn detection apparatus (feeler) disposed at the end of the weaving width.

A weft-yarn detection apparatus (11) of a loom for detecting an arrival of a weft yarn inserted includes a lens (23) disposed to face the weft yarn inserted along a weft-inserting direction (Y), a light-emitting element (21) emitting light to be projected on the weft yarn through the lens (23), and a light-receiving element (22) receiving the light emitted from the light-emitting element (21). The lens (23) is a cylindrical lens. A lens surface (25) of the lens (23) on a side facing the weft yarn is a convex surface and has a curvature that is greater in the weft-inserting direction (Y) than in a short-length direction (Z) of a reed (12).

## Claims

1. A weft-yarn detection apparatus (11) of a loom for detecting an arrival of a weft yarn inserted, the weft-yarn detection apparatus (11) comprising:
a lens (23) disposed to face the weft yarn that is inserted along a weft-inserting direction (Y);
a light-emitting element (21) emitting light to be projected on the weft yarn through the lens (23); and
a light-receiving element (22) receiving the light emitted from the light-emitting element (21), wherein
the lens (23) is a cylindrical lens, wherein a lens surface (25) of the lens (23) on a side facing the weft yarn is a convex surface,
**characterized in that**
the lens surface (25) of the lens (23) has a curvature that is greater in the weft-inserting direction (Y) than in a short-length direction (Z) of a reed (12).

2. The weft-yarn detection apparatus (11) of a loom according to claim 1, **characterized in that**
the lens surface (25) of the lens (23) has a curvature only in the weft-inserting direction (Y).

## Patentansprüche

1. Schussfadenerfassungsgerät (11) einer Webmaschine zum Erfassen einer Ankunft eines eingeführten Schussfadens, wobei das Schussfadenerfassungsgerät (11) Folgendes aufweist:
eine Linse (23), die angeordnet ist, um dem Schussfaden zugewandt zu sein, der entlang einer Schusseinführrichtung (Y) eingeführt wird;
ein Lichtaussendeelement (21), das Licht aussendet, das durch die Linse (23) auf den Schussfaden zu projizieren ist; und
ein Lichtempfangselement (22), das das Licht empfängt, das von dem Lichtaussendeelement (21) ausgesendet wird, wobei
die Linse (23) eine zylindrische Linse ist, wobei eine Linsenoberfläche (25) der Linse (23) an einer Seite, die dem Schussfaden zugewandt ist, eine konvexe Fläche ist,
**dadurch gekennzeichnet, dass**
die Linsenoberfläche (25) der Linse (23) eine Krümmung hat, die in der Schusseinführrichtung (Y) größer ist als in einer Richtung (Z) einer kurzen Länge eines Webblatts (12).

2. Schussfadenerfassungsgerät (11) einer Webmaschine nach Anspruch 1, **dadurch gekennzeichnet, dass**
die Linsenoberfläche (25) der Linse (23) eine Krümmung nur in der Schusseinführrichtung (Y) hat.

## Revendications

1. Appareil de détection de fil de trame (11) d'un métier à tisser destiné à détecter l'arrivée d'un fil de trame inséré, dans lequel l'appareil de détection de fil de trame (11) comprend :
une lentille (23) disposée afin de faire face au fil de trame qui est inséré dans une direction d'insertion de trame (Y) ;
un élément électroluminescent (21) qui émet de la lumière à projeter sur le fil de trame par le biais de la lentille (23) ; et
un élément de réception de lumière (22) qui reçoit la lumière émise par l'élément électroluminescent (21), dans lequel
la lentille (23) est une lentille cylindrique, dans lequel une surface de lentille (25) de la lentille (23) sur un côté tourné vers le fil de trame est une surface convexe,
**caractérisé en ce que**
la surface de lentille (25) de la lentille (23) présente une courbure plus importante dans la direction d'insertion de trame (Y) que dans une direction de longueur courte (Z) d'un peigne (12).

2. Appareil de détection de fil de trame (11) d'un métier à tisser selon la revendication 1, **caractérisé en ce que**
la surface de lentille (25) de la lentille (23) présente une courbure uniquement dans la direction d'insertion de trame (Y) .
